# EUROPÄISCHE PATENTANMELDUNG

(11) **EP 4 574 301 A2**
(43) Veröffentlichungstag der Anmeldung: **25.06.2025**
(21) Anmeldenummer: 24214441.8
(22) Anmeldetag: 21.11.2024
(51) Int. Cl.: B21J 15/32, B23K 9/20, B23P 19/00, B25B 23/04

(54) **TRANSPORTVORRICHTUNG**

(30) Priorität: 21.12.2023 DE 102023136245
(71) Anmelder: Atlas Copco IAS GmbH, 75015 Bretten (DE)
(72) Erfinder: Schaal, Eugen, 75015 Bretten (DE); Wenzel, Andreas, 75015 Bretten (DE)
(74) Vertreter: Patentanwälte Bregenzer und Reule Partnerschaftsgesellschaft mbB

(57) **Zusammenfassung**

Die Erfindung betrifft eine Vorrichtung (10a, 10b, 10c), zum Transport von elektrisch leitfähigen Verbindungselementen (12a, 12b) wie Nieten oder Schrauben von einer Sendestation zu einer Empfangsstation mit einer einen Transportkanal (22, 22c) für die Verbindungselemente (12a, 12b) umhüllenden, von der Sendestation zur Empfangsstation führenden Leitung (20, 20c) und mit einer ersten Spulenanordnung (24, 24c) mit mindestens einer ersten Magnetspule (26, 26c) zur Erzeugung eines ersten elektromagnetischen Felds im Transportkanal (22, 22c), deren Windungen um einen ersten Abschnitt (28, 28c) des Transportkanals (22, 22c) umlaufen, wobei das erste elektromagnetische Feld die Verbindungselemente (12a, 12b) in Richtung zur Empfangsstation beschleunigende Wirbelströme in den Verbindungselementen (12a, 12b) induziert. Erfindungsgemäß ist eine zweite Spulenanordnung (30, 30c) mit mindestens einer zweiten Magnetspule (32, 32c) zur Erzeugung eines zweiten elektromagnetischen Felds im Transportkanal (22, 22c) vorgesehen, deren Windungen um einen zweiten Abschnitt (34, 34c) des Transportkanals (22, 22c) umlaufen, welcher näher an der Empfangsstation angeordnet ist als der erste Abschnitt (28, 28c), wobei das zweite elektromagnetische Feld die Verbindungselemente (12a, 12b) in Richtung von der Empfangsstation weg beschleunigende Wirbelströme in den Verbindungselementen (12a, 12b) induziert.

## Beschreibung

Die Erfindung betrifft eine Transportvorrichtung zum Transport von elektrisch leitfähigen Verbindungselementen wie Nieten oder Schrauben von einer Sendestation zu einer Empfangsstation gemäß Oberbegriff des Anspruchs 1.

Eine Vorrichtung der eingangs genannten Art ist aus der US 1,441,250 bekannt und dient der Zuführung von Nieten zu einer Nietzange. Die Niete werden transportiert, indem sie mittels Magnetfeldern von Magnetspulen beschleunigt werden, welche um eine Transportleitung für die Niete angeordnet sind. Bei der vorbekannten Vorrichtung prallen die Niete aber unkontrolliert und im Extremfall mit hoher Geschwindigkeit gegen einen Anschlag an der Empfangsstation oder auf dort bereits wartende Niete.

Es ist daher Aufgabe der Erfindung, eine Vorrichtung der eingangs genannten Art derart weiterzubilden, dass die Ankunft der Verbindungselemente an der Empfangsstation besser gesteuert werden kann.

Diese Aufgabe wird erfindungsgemäß durch eine Vorrichtung mit den Merkmalen des Anspruchs 1 gelöst. Vorteilhafte Weiterbildungen der Erfindung sind Gegenstand der abhängigen Ansprüche.

Der Erfindung liegt der Gedanke zugrunde, die sich mit hoher Geschwindigkeit durch den Transportkanal der Leitung zur Empfangsstation bewegenden Verbindungselemente vor der Ankunft an der Empfangsstation definiert abzubremsen.

Auf diese Weise kann zum einen vermieden werden, dass die Verbindungselement mit hoher Geschwindigkeit am Ende der Leitung ankommen und dort im Lauf der Zeit Verschleiß verursachen. Zum anderen ist es auch möglich, die Verbindungselemente in einem Endbereich der Leitung abzubremsen und dort in Bereitschaft zu halten, so dass die endgültige Zuführung zur Empfangsstation nur über einen kurzen Weg erfolgen muss. Die Windungen der mindestens einen ersten und der mindestens einen zweiten Magnetspule müssen dabei nicht um den gesamten ersten bzw. zweiten Abschnitt des Transportkanals umlaufen. In der Regel laufen sie nur um einen Teil des betreffenden Abschnitts um.

Gemäß einer vorteilhaften Weiterbildung weist die Leitung zwischen dem ersten Abschnitt und dem zweiten Abschnitt eine Weiche auf, die den zweiten Abschnitt wahlweise mit dem ersten Abschnitt oder mit einem in der Richtung von der Empfangsstation weg auf den zweiten Abschnitt folgenden dritten Abschnitt des Transportkanals verbindet. Auch die wahlweise Verbindung mit weiteren Abschnitten ist möglich. Auf diese Weise ist es möglich, nicht benötigte Verbindungselemente von der Empfangsstation weg zurück zu transportieren, ohne dass sie die Zuführung weiterer Verbindungselemente von der Sendestation behindern. Beispielsweise können die Verbindungselemente in einen Behälter transportiert werden, in den der dritte Abschnitt zweckmäßig mündet. In einer anderen Betriebsart können über den ersten, den dritten und gegebenenfalls weitere Abschnitte unterschiedliche Verbindungselemente der Weiche und somit dem zweiten Abschnitt zugeführt werden. Weiter kann vorteilhaft zwischen dem zweiten Abschnitt und der Weiche ein Detektor zur Bestimmung von die Verbindungselemente definierenden Parametern angeordnet sein. Mit dem Detektor kann beispielsweise erkannt werden, wenn es sich bei den betreffenden Verbindungselementen um fehlerhafte Verbindungselemente oder Verbindungselemente des falschen Typs handelt. Diese Erkennung kann beispielsweise erfolgen, indem der Detektor eingerichtet ist, einen durch ein Verbindungselement induzierten Wirbelstrom zu messen. Weiter kann eine Steuereinrichtung vorgesehen sein, die zur Ansteuerung der Weiche in Abhängigkeit von vom Detektor erhaltenen Daten dient. Weisen die vom Detektor ermittelten Daten darauf hin, dass die Verbindungselemente nicht den Anforderungen entsprechen, weil beispielsweise ein vom Detektor bestimmter Parameter des Verbindungselements außerhalb eines vorgegebenen Toleranzbereichs liegt, so kann die Weiche zur Verbindung des zweiten Abschnitts mit dem dritten Abschnitt gestellt werden, und die Verbindungselemente können in den dritten Abschnitt zurück transportiert werden. Die Erkennung der Verbindungselemente kann, ebenso wie ihre Entfernung aus dem zweiten Abschnitt, beispielsweise durch Rücksendung über die Weiche oder Entleerung des zweiten Abschnitts, manuell durch eine Bedienperson erfolgen, die beispielsweise auch die Weiche stellt. Auch eine automatische Entleerung des zweiten Abschnitts bei Erkennung einer Störung ist möglich.

Die mindestens eine erste Magnetspule und die mindestens eine zweite Magnetspule können auf unterschiedliche Weise an der Leitung angeordnet bzw. mit dieser verbunden sein. Insbesondere ist es möglich, dass die mindestens eine Magnetspule und/oder die mindestens eine zweite Magnetspule in die Leitung eingebettet ist. Weiter ist es möglich, dass die mindestens eine Magnetspule und/oder die mindestens eine zweite Magnetspule um eine Außenseite der Leitung umlaufend angeordnet ist.

Vorteilhaft weist der Transportkanal einen Querschnitt auf, der in seiner Form einem Längsschnitt der Verbindungselemente entspricht. Die Verbindungselemente können dann in definierter Ausrichtung durch die Leitung transportiert werden. Beispielsweise können im Längsschnitt T-förmige Niete alle gleich, beispielsweise mit dem Kopf nach oben, ausgerichtet transportiert werden, so dass sie an der Empfangsstation nicht in die richtige Position gedreht werden müssen.

Gemäß einer vorteilhaften Weiterbildung ist ein faseroptischer Sensor vorgesehen, der mindestens eine mit der Leitung geführte Sensorfaser, einen an die mindestens eine Sensorfaser angeschlossenen Lichtdetektor zur Detektion von durch die mindestens eine Sensorfaser geleitetem Licht und eine Lichtquelle zur Einleitung von Licht in die mindestens eine Sensorfaser aufweist. Wird die Leitung so weit geknickt, dass ein Durchleiten der Verbindungselemente durch den Transportkanal deutlich eingeschränkt ist, so wird auch die mit der Leitung geführte Sensorfaser geknickt, so dass sich die Intensität des vom Lichtdetektor detektierten Lichts verringert. Diese vorteilhafte Weiterbildung der Vorrichtung gemäß Anspruch 1 kann auch unabhängig von der Lehre des Anspruchs 1 eine eigenständige Erfindung bilden. Zweckmäßig ist eine Steuereinheit zur Steuerung des Transports der Verbindungselemente vorgesehen, die vom Lichtdetektor Informationen über die Intensität des empfangenen Lichts enthält. Ist diese Intensität zu gering, so schließt die Steuereinheit auf einen zu starken Knick in der Sensorfaser und damit auch in der Leitung, so dass der Transport der Verbindungselemente gestoppt und der Knick in der Leitung beseitigt werden kann.

Im Folgenden wird die Erfindung anhand zweier in der Zeichnung schematisch dargestellter Ausführungsbeispiele näher erläutert. Es zeigen
- Fig. 1a, 1b: eine Vorrichtung zum Transport von Verbindungselementen gemäß einem ersten Ausführungsbeispiel in schematisierter perspektivischer Darstellung und in einer Detaildarstellung;
- Fig. 2a, 2b: eine Vorrichtung zum Transport von Verbindungselementen gemäß einem zweiten Ausführungsbeispiel in schematisierter perspektivischer Darstellung und in einer Detaildarstellung;
- Fig. 3: eine Vorrichtung zum Transport von Verbindungselementen gemäß einem dritten Ausführungsbeispiel in schematisierter perspektivischer Darstellung und
- Fig. 4a, 4b: eine Leitung in perspektivischer Darstellung und im Querschnitt.

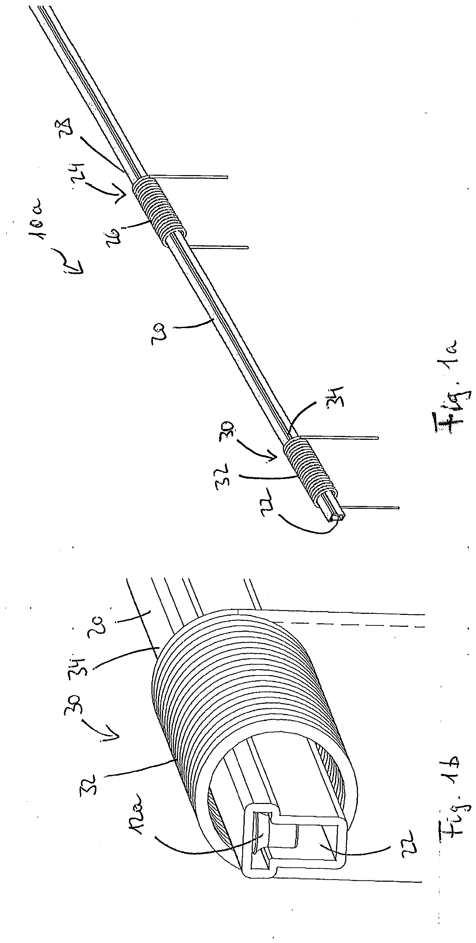

Die lediglich schematisch dargestellte Vorrichtung 10a gemäß Fig. 1a, 1b dient dem Transport von Nieten 12a von einer nicht gezeigten Sendestation zu einer ebenfalls nicht gezeigten Empfangsstation, beispielsweise von einem Nietvorrat zu einer mit einer Nietzange ausgerüsteten Verarbeitungsstation. Sie weist eine Leitung 20 auf, die einen Transportkanal 22 umschließt, welcher im Querschnitt T-förmig ausgebildet ist. Der Querschnitt des Transportkanals 22 ist somit an einen Längsschnitt der Niete 12a angepasst, so dass der Nietschaft im senkrechten Strich des T aufgenommen ist, während der Nietkopf im Querstrich aufgenommen ist. Auf diese Weise können die Niete 12a in definierter Position transportiert werden. Zum Transport der Niete 12a weist die Vorrichtung 10a eine erste Spulenanordnung 24 auf, die eine erste Magnetspule 26 aufweist, deren Windungen um einen Teil eines ersten Abschnitts 28 des Transportkanals 22 verlaufen. Die erste Spulenanordnung 24 erzeugt ein erstes elektromagnetisches Feld im Transportkanal 22, das in den Nieten 12a Wirbelströme erzeugt, die die Nieten 12a in Richtung zur Empfangsstation beschleunigen. Die Vorrichtung 10a weist zudem eine zweite Spulenanordnung 30 auf, die eine zweite Magnetspule 32 aufweist, deren Windungen um einen Teil eines zweiten Abschnitts 34 des Transportkanals 22 umlaufen. Die zweite Spulenanordnung 30 erzeugt ein zweites elektromagnetisches Feld im Transportkanal 22, welches Wirbelströme in den Nieten 12a induziert, die diese von der Empfangsstation weg beschleunigen. Durch dieses elektromagnetische Feld können Niete 12a, die sich, von der ersten Spulenanordnung 24 beschleunigt, auf die Empfangsstation zu bewegen, vor Erreichen der Empfangsstation abgebremst werden.

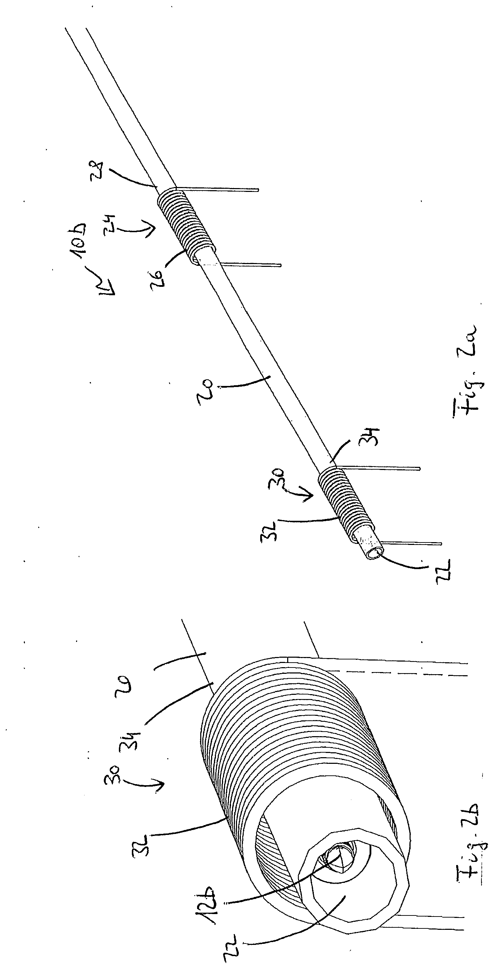

Die Vorrichtung 10b gemäß dem zweiten Ausführungsbeispiel (Fig. 2a, 2b) unterscheidet sich von der Vorrichtung 10a gemäß dem ersten Ausführungsbeispiel lediglich in der Form der Leitung 20. Gleiche Merkmale sind daher mit den gleichen Bezugszeichen versehen. Der schematische Aufbau der Vorrichtung 10b gemäß dem zweiten Ausführungsbeispiel ist identisch mit dem schematischen Aufbau der Vorrichtung 10a gemäß dem ersten Ausführungsbeispiel. Die Vorrichtung 10b ist aber für den Transport von Schrauben 12b, länglichen Nieten, vorzugsweise mit einer Länge von mindestens 10mm, Setz- oder Stanznietbolzen oder Stiften eingerichtet, und der Transportkanal 22 hat einen kreisrunden Querschnitt oder einen Querschnitt in Form eines regelmäßigen Vielecks. Die Schrauben 12b werden, wie in Fig. 2b angedeutet, in axialer Richtung durch die Leitung 20 transportiert. Die weitere Funktionsweise der Vorrichtung 10b ist identisch mit der Funktionsweise der Vorrichtung 10a gemäß dem ersten Ausführungsbeispiel.

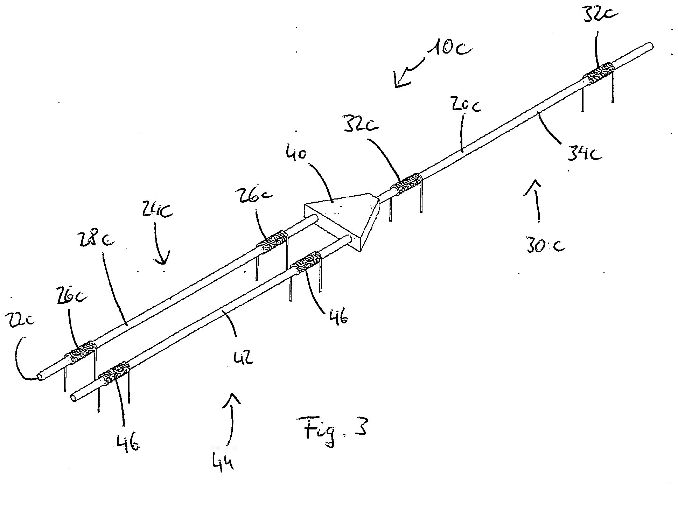

Die Vorrichtung 10c gemäß dem dritten Ausführungsbeispiel (Fig. 3) greift ebenfalls auf dasselbe Prinzip zurück. Auch hier werden Verbindungselemente wie die Niete 12a oder die Schrauben 12b von einer nicht dargestellten Sendestation zu einer nicht dargestellten Empfangsstation transportiert. Zu diesem Zweck ist eine erste Spulenanordnung 24c vorgesehen, die zwei im Abstand zueinander angeordnete Magnetspulen 26c aufweist, deren Windungen sich jeweils um Teile eines ersten Abschnitts 28c des für den Transport der Verbindungselemente vorgesehenen Transportkanals 22c umlaufen. Weiter ist eine zweite Spulenanordnung 30c vorgesehen, die zwei zweite Magnetspulen 32c aufweist, deren Windungen jeweils um Teile eines zweiten Abschnitts 34c des Transportkanals 22c umlaufen. Der Transportkanal 22c wird wiederum durch eine Leitung 20c rings umschlossen. Zwischen dem ersten Abschnitt 28c und dem zweiten Abschnitt 34c ist eine Weiche 40 angeordnet, von der aus sich ein dritter Abschnitt 42 des Transportkanals 22c in einer Richtung von der Empfangsstation weg von der Weiche 40 bis zu einem nicht dargestellten Behälter erstreckt. Eine dritte Spulenanordnung 44 weist zwei dritte Magnetspulen 46 auf, deren Windungen jeweils um Teile des dritten Abschnitts 42 umlaufen. Die dritte Spulenanordnung 44 dient dazu, in den Verbindungselementen Wirbelströme zu induzieren, die diese zum Behälter beschleunigen. Von der Sendestation kommende Verbindungselemente werden zunächst durch den ersten Abschnitt 28c und die Weiche 40 in den zweiten Abschnitt 34c transportiert. Ein dort angeordneter, nicht im Detail gezeigter Detektor bestimmt Parameter, die die Verbindungselemente definieren, indem er Wirbelströme misst, die die Verbindungselemente aufgrund ihrer Bewegung induzieren. Erkennt der Detektor, dass die Verbindungselemente nicht den Vorgaben entsprechen, indem beispielsweise von ihm bestimmte Parameter nicht in einen Normbereich fallen, so steuert eine ebenfalls nicht näher dargestellte Steuereinrichtung die Weiche 40 an, so dass diese den zweiten Abschnitt 34c nicht mit dem ersten Abschnitt 28c, sondern mit dem dritten Abschnitt 42 verbindet. Die zweite Spulenanordnung 30c bremst die Verbindungselemente im zweiten Abschnitt 34c ab und beschleunigt sie zurück zur Weiche 40 und in den dritten Abschnitt 42, von wo aus sie mittels der dritten Spulenanordnung 44 zum Behälter transportiert werden.

Für die Vorrichtung 10c gemäß dem dritten Ausführungsbeispiel ist noch eine weitere Betriebsart denkbar. So können Verbindungselemente unterschiedlicher Art von Sendestationen zur Empfangsstation transportiert werden. Verbindungselemente einer ersten Art können von einer nicht dargestellten ersten Sendestation über den ersten Abschnitt 28c zur Weiche 40 transportiert werden, während Verbindungselemente einer zweiten Art von einer nicht dargestellten zweiten Sendestation über den dritten Abschnitt 42 zur Weiche 40 transportiert werden, je nachdem welche Art von Verbindungselementen benötigt wird. Der Transport zur Empfangsstation erfolgt von der Weiche 40 über den zweiten Abschnitt 34c. Dabei kann es sich beispielsweise um Schrauben mit zwei unterschiedlichen Längen handeln. Auch die Zusammenführung von mehr als zwei Abschnitten an der Weiche 40 ist möglich, um mehr als zwei Arten von Verbindungsmitteln zur Weiche 40 zu transportieren. In der Regel werden die benötigten Verbindungselemente nahe der Empfangsstation bereitgehalten. Wenn ein anderes Verbindungselement benötigt wird, können die nahe der Empfangsstation vorgehaltenen Verbindungselemente zu der Sendestation zurück transportiert werden, von der sie gekommen sind. Dann schaltet die Weiche 40 um, und es werden die anderen Verbindungselemente zur Empfangsstation transportiert. Auch bei dieser Ausführungsform ist es möglich, dass ein Detektor vorgesehen ist, der erkennt, welche Verbindungselemente transportiert bzw. vorgehalten werden.

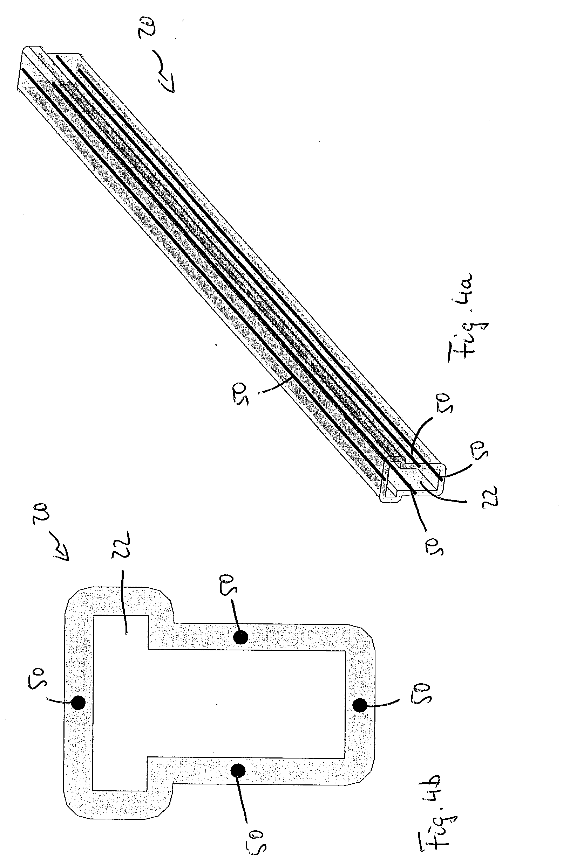

In Fig. 4a, 4b ist eine Leitung 20 dargestellt, die bei den Vorrichtungen 10a, 10b, 10c gemäß Fig. 1a, 1b, 2a, 2b, 3 zum Einsatz kommen kann und die dort gezeigte Leitung 20, 20c ganz oder abschnittsweise ersetzt. Die Leitung 20 umschließt einen Transportkanal 22, der wiederum im Querschnitt T-förmig ist und dem Transport von Nieten 12a dient. Der T-förmige Querschnitt ist dabei aber lediglich beispielhaft zu sehen. In die Leitung 20 sind vier Sensorfasern 50 eingebettet, die Bestandteil eines faseroptischen Sensors sind. Die Sensorfasern 50 verlaufen parallel und im Abstand zueinander über die gesamte Länge der Leitung 20. Neben den Sensorfasern 50 weist der faseroptische Sensor eine Lichtquelle auf, deren Licht am einen Ende in die Sensorfasern 50 eingeleitet wird, sowie einen Lichtdetektor, der am anderen Ende der Sensorfasern 50 angeordnet ist und dort das Licht der Lichtquelle empfängt. Die Lichtquelle und der Lichtdetektor sind in der Zeichnung nicht näher dargestellt. Ist die Leitung 20 zu stark geknickt, so wirkt sich dies durch eine verringerte Intensität des vom Lichtdetektor empfangenen Lichts aus. Eine Verringerung der Intensität des empfangenen Lichts unter einen vorgegebenen Minimalwert erkennt eine ebenfalls nicht näher dargestellte Steuereinheit, die dann den Transport von Verbindungselementen durch die geknickte Leitung 20 stoppt. Es versteht sich von selbst, dass nicht zwingend vier Sensorfasern 50 in die Leitung 20 eingebettet sein müssen. Das diesem Erfindungsaspekt zugrunde liegende Prinzip ist auch bei Verwendung von nur einer Sensorfaser 50 möglich oder aber bei Verwendung einer anderen Anzahl von Sensorfasern 50.

Zusammenfassend ist folgendes festzuhalten: Die Erfindung betrifft eine Vorrichtung 10a, 10b, 10c zum Transport von elektrisch leitfähigen Verbindungselementen 12a, 12b wie Nieten oder Schrauben von einer Sendestation zu einer Empfangsstation mit einer einen Transportkanal 22, 22c für die Verbindungselemente 12a, 12b umhüllenden, von der Sendestation zur Empfangsstation führenden Leitung 20, 20c und mit einer ersten Spulenanordnung 24, 24c mit mindestens einer ersten Magnetspule 26, 26c zur Erzeugung eines ersten elektromagnetischen Felds im Transportkanal 22, 22c, deren Windungen um einen ersten Abschnitt 28, 28c des Transportkanals 22, 22c umlaufen, wobei das erste elektromagnetische Feld die Verbindungselemente 12a, 12b in Richtung zur Empfangsstation beschleunigende Wirbelströme in den Verbindungselementen 12a, 12b induziert. Erfindungsgemäß ist eine zweite Spulenanordnung 30, 30c mit mindestens einer zweiten Magnetspule 32, 32c zur Erzeugung eines zweiten elektromagnetischen Felds im Transportkanal 22, 22c vorgesehen, deren Windungen um einen zweiten Abschnitt 34, 34c des Transportkanals 22, 22c umlaufen, welcher näher an der Empfangsstation angeordnet ist als der erste Abschnitt 28, 28c, wobei das zweite elektromagnetische Feld die Verbindungselemente 12a, 12b in Richtung von der Empfangsstation weg beschleunigende Wirbelströme in den Verbindungselementen 12a, 12b induziert.

## Patentansprüche

1. Vorrichtung zum Transport von elektrisch leitfähigen Verbindungselementen (12a, 12b) wie Nieten oder Schrauben von einer Sendestation zu einer Empfangsstation mit einer einen Transportkanal (22, 22c) für die Verbindungselemente (12a, 12b) umhüllenden, von der Sendestation zur Empfangsstation führenden Leitung (20, 20c) und mit einer ersten Spulenanordnung (24, 24c) mit mindestens einer ersten Magnetspule (26, 26c) zur Erzeugung eines ersten elektromagnetischen Felds im Transportkanal (22, 22c), deren Windungen um einen ersten Abschnitt (28, 28c) des Transportkanals (22, 22c) umlaufen, wobei das erste elektromagnetische Feld die Verbindungselemente (12a, 12b) in Richtung zur Empfangsstation beschleunigende Wirbelströme in den Verbindungselementen (12a, 12b) induziert, **gekennzeichnet durch** eine zweite Spulenanordnung (30, 30c) mit mindestens einer zweiten Magnetspule (32, 32c) zur Erzeugung eines zweiten elektromagnetischen Felds im Transportkanal (22, 22c), deren Windungen um einen zweiten Abschnitt (34, 34c) des Transportkanals (22, 22c) umlaufen, welcher näher an der Empfangsstation angeordnet ist als der erste Abschnitt (28, 28c), wobei das zweite elektromagnetische Feld die Verbindungselemente (12a, 12b) in Richtung von der Empfangsstation weg beschleunigende Wirbelströme in den Verbindungselementen (12a, 12b) induziert.

2. Vorrichtung nach Anspruch 1, **dadurch gekennzeichnet, dass** die Leitung (20c) zwischen dem ersten Abschnitt (28c) und dem zweiten Abschnitt (34c) eine Weiche (40) aufweist, die den zweiten Abschnitt (34c) wahlweise mit dem ersten Abschnitt (28c) oder mindestens mit einem in der Richtung von der Empfangsstation weg auf den zweiten Abschnitt (34c) folgenden dritten Abschnitt (42) des Transportkanals (22c) verbindet.

3. Vorrichtung nach Anspruch 2, **dadurch gekennzeichnet, dass** der dritte Abschnitt (42) in einen Behälter für die Verbindungselemente (12a, 12b) mündet.

4. Vorrichtung nach Anspruch 2 oder 3, **gekennzeichnet durch** einen zwischen dem zweiten Abschnitt (34c) und der Weiche (42) angeordneten Detektor zur Bestimmung von die Verbindungselemente (12a, 12b) definierenden Parametern.

5. Vorrichtung nach Anspruch 4, **gekennzeichnet durch** eine Steuereinrichtung zur Ansteuerung der Weiche (42) in Abhängigkeit von vom Detektor erhaltenen Daten.

6. Vorrichtung nach Anspruch 4 oder 5, **dadurch gekennzeichnet, dass** der Detektor eingerichtet ist, einen durch ein Verbindungselement (12a, 12b) induzierten Wirbelstrom zu messen.

7. Vorrichtung nach einem der vorangehenden Ansprüche, **dadurch gekennzeichnet, dass** die mindestens eine erste Magnetspule (26, 26c) und/oder die mindestens eine zweite Magnetspule (32, 32c) in die Leitung (20, 20c) eingebettet ist.

8. Vorrichtung nach einem der vorangehenden Ansprüche, **dadurch gekennzeichnet, dass** die mindestens eine erste Magnetspule (26, 26c) und/oder die mindestens eine zweite Magnetspule (32, 32c) um eine Außenseite der Leitung (20, 20c) umlaufend angeordnet ist.

9. Vorrichtung nach einem der vorangehenden Ansprüche, **dadurch gekennzeichnet, dass** der Transportkanal (22, 22c) einen Querschnitt aufweist, der in seiner Form einem Längsschnitt der Verbindungselemente (12a, 12b) entspricht.

10. Vorrichtung nach einem der vorangehenden Ansprüche, **gekennzeichnet durch** einen faseroptischen Sensor, der mindestens eine mit der Leitung (20, 20c) geführte Sensorfaser (50), einen an die mindestens eine Sensorfaser (50) angeschlossenen Lichtdetektor zur Detektion von durch die mindestens eine Sensorfaser (50) geleitetem Licht und eine Lichtquelle zur Einleitung von Licht in die mindestens eine Sensorfaser (50) aufweist.

11. Verfahren zum Transport von elektrisch leitfähigen Verbindungselementen (12a, 12b) von einer Sendestation zu einer Empfangsstation unter Verwendung einer Vorrichtung (10a, 10b, 10c) nach einem der vorangehenden Ansprüche, wobei die Verbindungselemente (12a, 12b) mittels der ersten Spulenanordnung (24, 24c) in Richtung von der Sendestation zur Empfangsstation beschleunigt und mittels der zweiten Spulenanordnung (30, 30c) vor Erreichen der Empfangsstation abgebremst werden.

12. Verfahren nach Anspruch 11 unter Verwendung einer Vorrichtung nach Anspruch 5 oder 6, **dadurch gekennzeichnet, dass** die Steuereinrichtung die Weiche (40) zur Verbindung des zweiten Abschnitts (34c) mit dem ersten Abschnitt (28c) und die zweite Spulenanordnung (30c) zur Beschleunigung eines Verbindungselements (12a, 12b) vom zweiten (34c) in den dritten Abschnitt (42) ansteuert, wenn ein vom Detektor bestimmter Parameter des Verbindungselements (12a, 12b) außerhalb eines vorgegebenen Toleranzbereichs liegt.

13. Vorrichtung zum Transport von Verbindungselementen (12a, 12b) wie Nieten oder Schrauben von einer Sendestation zu einer Empfangsstation mit einer einen Transportkanal (22, 22c) für die Verbindungselemente (12a, 12b) umhüllenden, von der Sendestation zur Empfangsstation führenden Leitung (20, 20c) und mit einer Einrichtung (24, 24c) zum Beschleunigen der Verbindungselemente in Richtung von der Sendestation zur Empfangsstation, **gekennzeichnet durch** einen faseroptischen Sensor, der mindestens eine mit der Leitung (20, 20c) geführte Sensorfaser (50), einen an die mindestens eine Sensorfaser (50) angeschlossenen Lichtdetektor zur Detektion von durch die mindestens eine Sensorfaser (50) geleitetem Licht und eine Lichtquelle zur Einleitung von Licht in die mindestens eine Sensorfaser (50) aufweist.

14. Vorrichtung nach Anspruch 10 oder 13, **gekennzeichnet durch** eine Steuereinheit zur Steuerung des Transports der Verbindungselemente (12a, 12b), die vom Lichtdetektor Informationen über die Intensität des empfangenen Lichts erhält.

15. Verfahren zum Transport von Verbindungselementen (12a, 12b) wie Nieten oder Schrauben von einer Sendestation zu einer Empfangsstation unter Verwendung einer Vorrichtung nach Anspruch 14, **dadurch gekennzeichnet, dass** die Steuereinheit den Transport der Verbindungselemente (12a, 12b) stoppt, wenn die Intensität des empfangenen Lichts einen vorgegebenen Minimalwert unterschreitet.
